# EUROPEAN PATENT APPLICATION

(11) **EP 3 745 380 A1**
(43) Date of publication of application: **02.12.2020**
(21) Application number: 20176201.0
(22) Date of filing: 22.05.2020
(51) Int. Cl.: G08G 5/00, G08G 5/02, G08G 5/04, G08G 5/06, G06N 20/00, G06N 7/00, G09B 29/00, G07C 5/00

(54) **METHOD AND SYSTEM FOR FLIGHT SAFETY ANALYTICS DISPLAY**

(30) Priority: 30.05.2019 US 201962854389 P; 30.03.2020 US 202016833785
(71) Applicant: Honeywell International Inc., Morris Plains, NJ 07950 (US)
(72) Inventor: LETSU-DAKE, Emmanuel, Morris Plains, NJ New Jersey 07950 (US); ORHAN, Umut, Morris Plains, NJ New Jersey 07950 (US); MOGHADAMFALAHI, Mohammad, Morris Plains, NJ New Jersey 07950 (US)
(74) Representative: Lucas, Peter Lawrence

(57) **Abstract**

Methods and systems are provided for calculating and displaying flight safety analytics for an aircraft. The method comprises first receiving historical flight data for the aircraft from a flight data quick access recorder (QAR) located onboard the aircraft. The flight data is then processed to identify safety events and store the identified safety events in an events database. The contents of the events database are analyzed to determine statistical data regarding the identified safety events. An onboard predictive model is applied that utilizes the statistical data to predict the likelihood of a safety event based on current flight data received from the aircraft. The predicted likelihood of a safety event is displayed on a flight display of the aircraft.

## Description

### TECHNICAL FIELD

The present invention generally relates to aircraft operations, and more particularly relates to calculating and displaying flight safety analytics.

### BACKGROUND

Aircraft crewmembers need to be aware of prevalent and probable safety event information related to their flight during briefing for all phases of flight (departure, enroute, approach and landing). The crewmembers also need to be aware of safety events to make proper decisions in case of an emergency. If safety hazards relevant to the flight plan can be proactively identified, they can be mitigated as part of normal operations. Hence, there is a need for a system and method for flight safety analytics display.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for calculating and displaying flight safety analytics for an aircraft. The method comprises: receiving historical flight data for the aircraft from a flight data quick access recorder (QAR) located onboard the aircraft; processing the flight data to identify safety events and store the identified safety events in an events database; analyzing the contents of the events database to determine statistical data regarding the identified safety events; applying an onboard predictive model that utilizes the statistical data to predict the likelihood of a safety event based on current flight data received from the aircraft; and displaying the predicted likelihood of a safety event on a flight display of the aircraft.

A system is provided for calculating and displaying flight safety analytics for an aircraft. The system comprises: a flight data quick access recorder (QAR) located onboard the aircraft that provides historical flight data for the aircraft; an onboard flight management system (FMS) that, processes the flight data to identify safety events and store the identified safety events in an events database, analyzes the contents of the events database to determine statistical data regarding the identified safety events, and applies an onboard predictive model that utilizes the statistical data to predict the likelihood of a safety event based on current flight data received from the aircraft; and an onboard flight display that displays the predicted likelihood of a safety event.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a diagram of a flight management computer (FMC) system for an aircraft in accordance with one embodiment;
FIG.2 shows a diagram of a process for calculating and displaying flight data analytics for an aircraft in accordance with one embodiment;
FIG.3 shows a table of aircraft events and trigger definitions in accordance with one embodiment;
FIG. 4 shows examples of database entries for aircraft events in accordance with one embodiment;
FIG. 5 shows a diagram of an example of the operation of a system for calculating and displaying flight safety analytics for an aircraft in accordance with one embodiment; and
FIG. 6 shows a flowchart of a method for calculating displaying flight safety analytics for an aircraft in accordance with one embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A method and system for calculating and displaying flight safety analytics for an aircraft type has been developed. Historical flight data from an aircraft is received from a flight data storage database such as quick access recorder (QAR) located on board the aircraft. In alternative embodiments, historical flight data may be received from a ground-based flight data storage database through an Aircraft Data Gateway (ADG). The historical flight data is processed to identify safety events that are then stored in an events database. The contents of the events database are analyzed to determine statistical data regarding the identified safety events. An onboard predictive model utilizes a statistical data to predict the likelihood of a safety event based on current flight data received from the aircraft. The likelihood of a predicted safety event is then displayed on a flight display for the aircrew. Data and analytics inference is not necessarily limited to a specific individual aircraft. Data and analytics from a same aircraft type/model can be applied to other similar type aircraft.

Embodiments of the subject matter described herein relate to an existing module integrated, incorporated, or otherwise instantiated for interoperability and use with other existing components of the vehicle system. For purposes of explanation, the subject matter is described herein primarily in the context of aircraft, however, the subject matter is not necessarily limited to use with aircraft and may be implemented in an equivalent manner for other types vehicles (e.g., automotive vehicles, marine vessels, or the like).

In exemplary embodiments, an existing flight management computer (FMC) (or flight management system (FMS)) onboard an aircraft is utilized to communicate data between existing onboard avionics systems or line-replaceable units (LRUs) and another module coupled to the FMC, which supports or otherwise performs new flight management functionality that is not performed by the FMC. For example, a multifunction control and display unit (MCDU) may support or otherwise perform new flight management functionality based on data from onboard avionics or LRUs received via the FMC. In this regard, the FMC is configured to receive operational or status data from one or more avionics systems or LRUs onboard the aircraft at corresponding avionics interfaces and convert one or more characteristics of the operational data to support communicating the operational data with the MCDU. For purposes of explanation, the subject matter may primarily be described herein in the context of converting operational data received from onboard avionics or LRUs in a first format (e.g., an avionics bus format) into another format supported by the interface with the MCDU, the subject matter described herein is not necessarily limited to format conversions or digital reformatting, and may be implemented in an equivalent manner for converting between other data characteristics, such as, for example, different data rates, throughputs or bandwidths, different sampling rates, different resolutions, different data compression ratios, and the like.

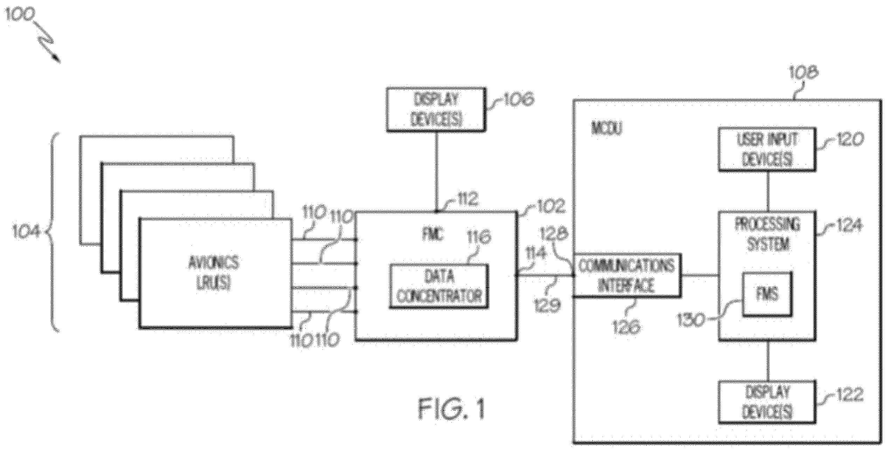

FIG. 1 depicts an exemplary embodiment of an aircraft system 100 suitable for implementation onboard an aircraft. The illustrated aircraft system 100 includes a flight management computing module 102 communicatively coupled to a plurality of onboard avionics LRUs 104, one or more display devices 106, and a multifunction computing module 108. It should be appreciated that FIG. 1 depicts a simplified representation of the aircraft system 100 for purposes of explanation, and FIG. 1 is not intended to limit the subject matter in any way.

The flight management computing module 102 generally represents the FMC, the FMS, or other hardware, circuitry, logic, firmware and/or other components installed onboard the aircraft and configured to perform various tasks, functions and/or operations pertaining to flight management, flight planning, flight guidance, flight envelope protection, four-dimensional trajectory generation or required time of arrival (RTA) management, and the like. Accordingly, for purposes of explanation, but without limiting the functionality performed by or supported at the flight management computing module 102, the flight management computing module 102 may alternatively be referred to herein as the FMC. The FMC 102 includes a plurality of interfaces 110 configured to support communications with the avionics LRUs 104 along with one or more display interfaces 112 configured to support coupling one or more display devices 106 to the FMC 102. In the illustrated embodiment, the FMC 102 also includes a communications interface 114 that supports coupling the multifunction computing module 108 to the FMC 102.

The FMC 102 generally includes a processing system designed to perform flight management functions, and potentially other functions pertaining to flight planning, flight guidance, flight envelope protection, and the like. Depending on the embodiment, the processing system could be realized as or otherwise include one or more processors, controllers, application specific integrated circuits, programmable logic devices, discrete gate or transistor logics, discrete hardware components, or any combination thereof. The processing system of the FMC 102 generally includes or otherwise accesses a data storage element (or memory), which may be realized as any sort of non-transitory short or long term storage media capable of storing programming instructions for execution by the processing system of the FMC 102. In exemplary embodiments, the data storage element stores or otherwise maintains code or other computer-executable programming instructions that, when read and executed by the processing system of the FMC 102, cause the FMC 102 to implement, generate, or otherwise support a data concentrator application 116 that performs certain tasks, operations, functions, and processes described herein.

The avionics LRUs 104 generally represent the electronic components or modules installed onboard the aircraft that support navigation, flight planning, and other aircraft control functions in a conventional manner and/or provide real-time data and/or information regarding the operational status of the aircraft to the FMC 102. For example, practical embodiments of the aircraft system 100 will likely include one or more of the following avionics LRUs 104 suitably configured to support operation of the aircraft: a weather system, an air traffic management system, a radar system, a traffic avoidance system, Terrain Avoidance and Warning System (TAWS), Runway Awareness and Advisory System (RAAS), an autopilot system, an autothrottle (or autothrust) system, a flight control system, hydraulics systems, pneumatics systems, environmental systems, electrical systems, engine systems, trim systems, lighting systems, crew alerting systems, electronic checklist systems, and/or another suitable avionics system.

In exemplary embodiments, the avionics interfaces 110 are realized as different ports, terminals, channels, connectors, or the like associated with the FMC 102 that are connected to different avionics LRUs 104 via different wiring, cabling, buses, or the like. In this regard, the interfaces 110 may be configured to support different communications protocols or different data formats corresponding to the respective type of avionics LRU 104 that is connected to a particular interface 110. For example, the FMC 102 may communicate navigation data from a navigation system via a navigation interface 110 coupled to a data bus supporting the ARINC 424 (or A424) standard, the ARINC 629 (or A629) standard, the ARINC 422 (or A422) standard, or the like. As another example, a datalink system or other communications LRU 104 may utilize an ARINC 619 (or A619) compatible avionics bus interface for communicating datalink communications or other communications data with the FMC 102.

The display device(s) 106 generally represent the electronic displays installed onboard the aircraft in the cockpit, and depending on the embodiment, could be realized as one or more monitors, screens, liquid crystal displays (LCDs), a light emitting diode (LED) displays, or any other suitable electronic display(s) capable of graphically displaying data and/or information provided by the FMC 102 via the display interface(s) 112. Similar to the avionics interfaces 110, the display interfaces 112 are realized as different ports, terminals, channels, connectors, or the like associated with the FMC 102 that are connected to different cockpit displays 106 via corresponding wiring, cabling, buses, or the like. In one or more embodiments, the display interfaces 112 are configured to support communications in accordance with the ARINC 661 (or A661) standard. In one embodiment, the FMC 102 communicates with a lateral map display device 106 using the ARINC 702 (or A702) standard.

In exemplary embodiments, the multifunction computing module 108 is realized as a multifunction control and display unit (MCDU) that includes one or more user interfaces, such as one or more input devices 120 and/or one or more display devices 122, a processing system 124, and a communications module 126. The MCDU 108 generally includes at least one user input device 120 that is coupled to the processing system 124 and capable of receiving inputs from a user, such as, for example, a keyboard, a key pad, a mouse, a joystick, a directional pad, a touchscreen, a touch panel, a motion sensor, or any other suitable user input device or combinations thereof. The display device(s) 122 may be realized as any sort of monitor, screen, LCD, LED display, or other suitable electronic display capable of graphically displaying data and/or information under control of the processing system 124.

The processing system 124 generally represents the hardware, circuitry, logic, firmware and/or other components of the MCDU 108 configured to perform the various tasks, operations, functions and/or operations described herein. Depending on the embodiment, the processing system 124 may be implemented or realized with a general purpose processor, a microprocessor, a controller, a microcontroller, a state machine, an application specific integrated circuit, a field programmable gate array, any suitable programmable logic device, discrete gate or transistor logic, discrete hardware components, or any combination thereof, designed to perform the functions described herein. Furthermore, the steps of a method or algorithm described in connection with the embodiments disclosed herein may be embodied directly in hardware, in firmware, in a software module executed by the processing system 124, or in any practical combination thereof. In this regard, the processing system 124 includes or accesses a data storage element (or memory), which may be realized using any sort of non-transitory short or long term storage media, and which is capable of storing code or other programming instructions for execution by the processing system 124. In exemplary embodiments described herein, the code or other computer-executable programming instructions, when read and executed by the processing system 124, cause the processing system 124 to implement or otherwise generate an FMS 130 application and perform additional tasks, operations, functions, and processes described herein.

The communications module 126 generally represents the hardware, module, circuitry, software, firmware and/or combination thereof that is coupled between the processing system 124 and a communications interface 128 of the MCDU 108 and configured to support communications between the MCDU 108 and the FMC 102 via an electrical connection 129 between the MCDU communications interface 128 and the FMC communications interface 114. For example, in one embodiment, the communications module 126 is realized as an Ethernet card or adapter configured to support communications between the FMC 102 and the MCDU 108 via an Ethernet cable 129 provided between Ethernet ports 114, 128. In other embodiments, the communications module 126 is configured to support communications between the FMC 102 and the MCDU 108 in accordance with the ARINC 429 (A429) standard via an A429 data bus 129 provided between A429 ports 114, 128 of the respective modules 102, 108. In yet other embodiments, the communications module 126 is configured to support communications between the FMC 102 and the MCDU 108 in accordance with the ARINC 422 (A422) standard via an A422 data bus 129 provided between A422 ports 114, 128 of the respective modules 102, 108. In yet other embodiments, the communications module 126 is configured to support communications between the FMC 102 and the MCDU 108 in accordance with the ARINC 739 (A739) standard via an A739 data bus 129 provided between A739 ports 114, 128 of the respective modules 102, 108.

In various embodiments, the FMC 102 and MCDU 108 communicate using a different communications protocol or standard than one or more of the avionics LRUs 104 and/or the display devices 106. In such embodiments, to support communications of data between the MCDU 108 and those LRUs 104 and/or display devices 106, the data concentrator application 116 at the FMC 102 converts data from one format to another before retransmitting or relaying that data to its destination. For example, the data concentrator application 116 may convert data received from an avionics LRU 104 to the A429 or Ethernet format before providing the data to the MCDU 108, and vice versa. Additionally, in exemplary embodiments, the FMC 102 validates the data received from an avionics LRU 104 before transmitting the data to the MCDU 108. For example, the FMC 102 may perform debouncing, filtering, and range checking, and/or the like prior to converting and retransmitting data from an avionics LRU 104.

It should be noted that although the subject matter may be described herein in the context of the multifunction computing module 108 being realized as an MCDU, in alternative embodiments, the multifunction computing module 108 could be realized as an electronic flight bag (EFB) or other mobile or portable electronic device. In such embodiments, an EFB capable of supporting an FMS 130 application may be connected to an onboard FMC 102 using an Ethernet cable 129 to support flight management functionality from the EFB in an equivalent manner as described herein in the context of the MCDU.

In one or more embodiments, the MCDU 108 stores or otherwise maintains programming instructions, code, or other data for programming the FMC 102 and transmits or otherwise provides the programming instructions to the FMC 102 to update or otherwise modify the FMC 102 to implement the data concentrator application 116. For example, in some embodiments, upon establishment of the connection 129 between modules 102, 108, the MCDU 108 may automatically interact with the FMC 102 and transmit or otherwise provide the programming instructions to the FMC 102, which, in turn, executes the instructions to implement the data concentrator application 116. In some embodiments, the data concentrator application 116 may be implemented in lieu of flight management functionality by the MCDU 108 reprogramming the FMC 102. In other embodiments, the FMC 102 may support the data concentrator application 116 in parallel with flight management functions. In this regard, the FMC 102 may perform flight management functions, while the FMS application 130 on the MCDU 108 supplements the flight management functions to provide upgraded flight management functionality within the aircraft system 100.

Most operators have Flight Data Monitoring or Flight Operations Quality Assurance (FOQA) programs to identify, quantify, assess and address operations by monitoring safety events. The main benefits of these programs are operational management at the organizational level and individual event data collection and storage. A safety event is an occurrence or condition in which predetermined values of flight parameters are measured and checked for deviations from Aircraft Flight Manual limits, Standard Operating Procedures (SOP) and good airmanship. Multiple industry and regulatory guides (e.g., IATA FDX, FAA AC 120-82) define safety events and their thresholds or triggers. However, safety event information awareness is relevant in the cockpit as it is offboard or organizationally.

Safety events made be caused during typical flight operations by various contextual complexities including for example: adverse meteorological conditions; airports surrounded by high mountains; congested airspace; aircraft malfunctions; and unfamiliar routes or airports. Finally, some safety event characteristics (*e.g.*, trends in occurrence rate) may not be directly obvious to, or observable by, flight crews immersed operations and may need to be determined and displayed by safety analytics.

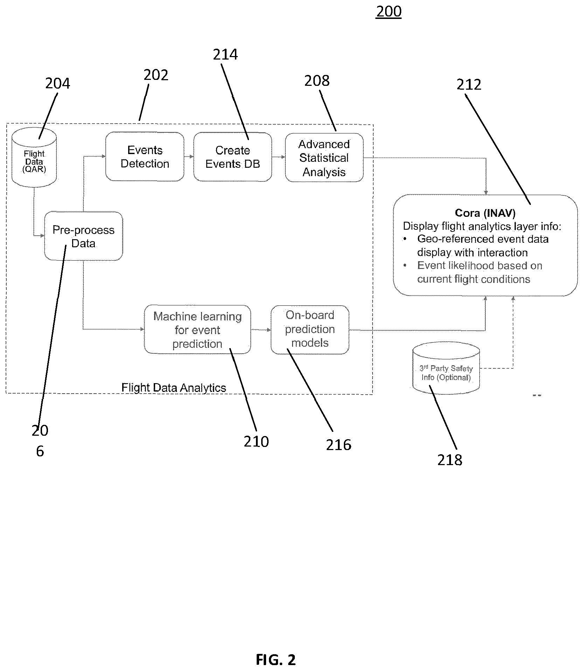

FIG.2 shows a diagram of a process for calculating and displaying flight data analytics for an aircraft 200 in accordance with one embodiment. The system shown in FIG. 2 is part of the processing system 124 and FMS 130 shown previously in FIG. 1. Some embodiments have four core parts using flight data analytics 202: data processing for safety information 206; advanced statistical analysis for safety event aggregation 208; event likelihood prediction using trained machine learning models 210; and an interactive display of safety information on a navigation display (CORA/Inav) 212. In some embodiments, the processing of flight data to identify safety events and analyzing the contents of the events database for statistical data may be done offboard the aircraft by another device. Historical flight data from an aircraft is received from a flight data QAR 204 located on board the aircraft. The historical flight data is pre-processed to identify safety events 206 that are then stored in an events database. The contents of the events database 214 are analyzed to determine statistical data regarding the events 208. An onboard predictive model 216 utilizes machine learning 210 to analyze the statistical data in order to predict the likelihood of a safety event based on current flight data received from the aircraft. The likelihood of a predicted safety event is then displayed on a flight display for the aircrew 212. In this embodiment, the flight analytics results are displayed on a CORA interactive navigational display 212. The display shows geo-referenced event data and the event likelihood based on current flight conditions. In some embodiments, additional safety information from third parties 218 may be displayed as well.

The system provides a display of flight safety analytics information to proactively support the flight crew in performing SOP briefing for all phases of flight contingency. The system analyses flight data and generates safety event information which is displayed to pilots in-flight to enhance their awareness of the prevalence of these events relative to their flight. The data is geo-referenced on a map display for ease of interpretation. Also, the geo-referenced data may be represented by a unique symbol on the display for ease of recognition. The displayed data can be filtered on multiple dimensions depending on pilots needs for more relevance to flight conditions. In addition to the display of raw and aggregated flight safety information, machine learning models that are trained using the historical flight safety information may predict the likelihood of events based on current flight conditions for crew awareness and briefing. The invention adds functionality and value to an interactive navigation/map display such as Interactive Navigation Display (INAV) through a data analytics layer with geo-referenced, phase of flight relevant information to enhance flight crew safety awareness.

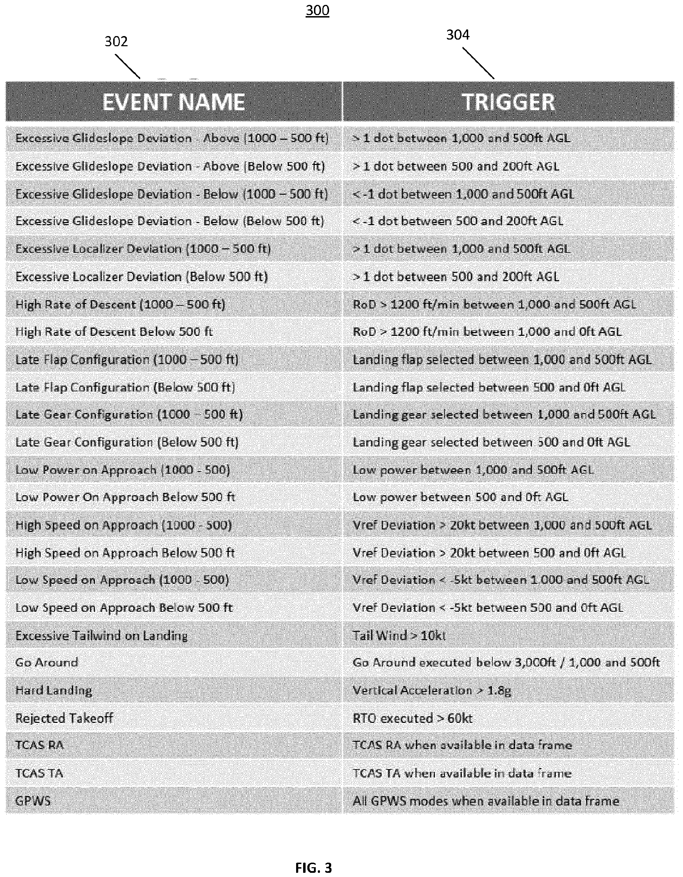

FIG.3 shows a table 300 of aircraft events and trigger definitions in accordance with one embodiment. This table corresponds to the events database 214 shown previously in FIG. 2. These examples of potential events 302 are listed with the conditions that trigger the event 304. These flight data analytics will be stored as a section in the event database. The data may be arranged and presented as a phase of flight (departure, enroute, destination, alternate). The information is typically identified from raw flight data from operators. It is processed to detect a set of industry and regulatory prioritized types of safety events including: unstable approaches; various ground proximity warning system (EGPWS/GPWS/TAWS) alerts; excessive tailwind on landing; traffic collision avoidance system (TCAS) alerts; hard landing; rejected takeoff; go around; geo-referenced (*e.g*., waypoint, latitude/long, airport, runway); aggregated event occurrence and frequency information; etc. Additional information can be displayed in addition to the indication of events such as: frequency; proportion; severity (*e.g.,* exceeds or close to trigger); trend (*e.g.,* increase/decrease in occurrence); etc.

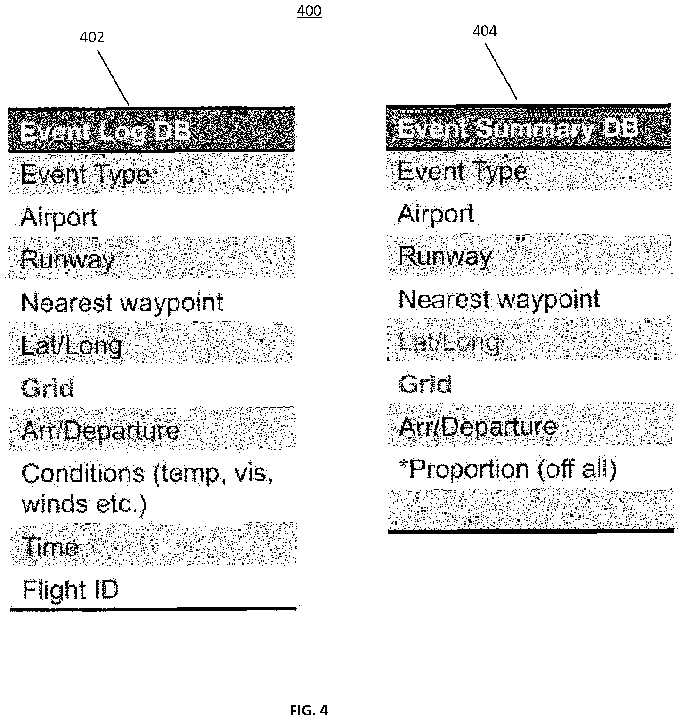

FIG. 4 shows examples of formatting of database entries for aircraft events in accordance with one embodiment. The formatting shown in FIG. 4 corresponds to the table of events and triggers 300 shown previously in FIG. 3. The formatting examples are shown for an Event Log Database (DB) 402 and Event Summary Database (DB) 404.

Advanced statistical analysis of events will generate trend identification and statistically significant observations. For example, such statistical calculations may include display threshold triggers (*e.g.*, occurrence rate > x % within a preset time window), and historical flight data is used to train machine learning models (*e.g*., neural network or logistic regression). During flight, real time flight and environmental and weather conditions inputs are used by the trained models predict likelihood of safety events. Predictions above a set threshold are presented in the flight display. In some embodiments, the display will allow the flight crew to filter events to be displayed by multiple variables such as: flight plan; time range; aircraft type; current flight conditions; or display all data. Additionally, a user may have the capability to set event display threshold.

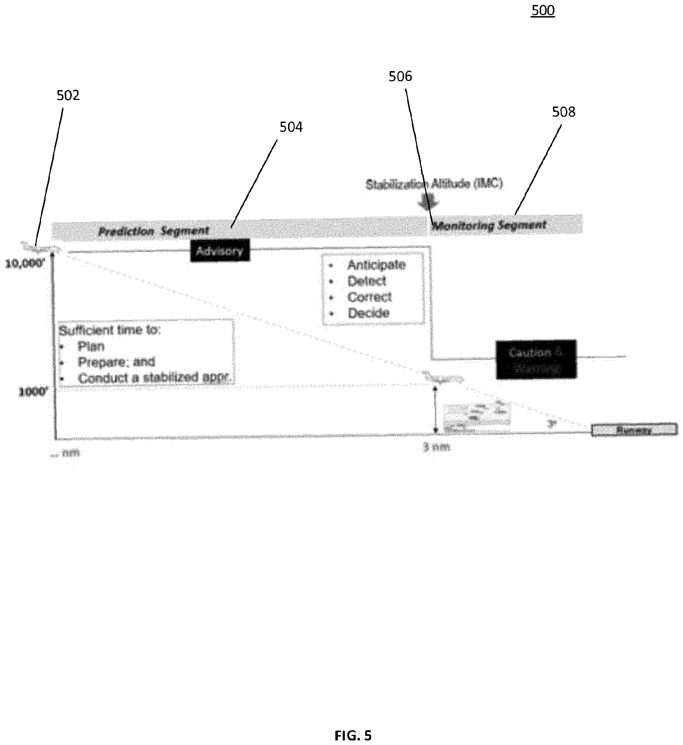

FIG. 5 shows a diagram 500 of an example of the operation of a system for calculating and displaying flight safety analytics for an aircraft in accordance with one embodiment. In this diagram, and aircraft 502 is descending on a final approach to a runway with a distinct prediction segment followed by a monitoring segment. During the prediction segment 504 of the approach, an advisory may be displayed to the aircrew that allow sufficient time to plan, prepare and conduct a stabilized approach. The aircrew can anticipate and detect any predicted events with adequate time to decide a course of action to correct any potential problems. However, once the aircraft reaches an altitude of 1000 feet and is 3 nautical miles (nm) from the runway 506, it enters the monitoring segment 508 of the approach where conventional avionics safety systems generate cautions and/or warnings of events that have not been avoided.

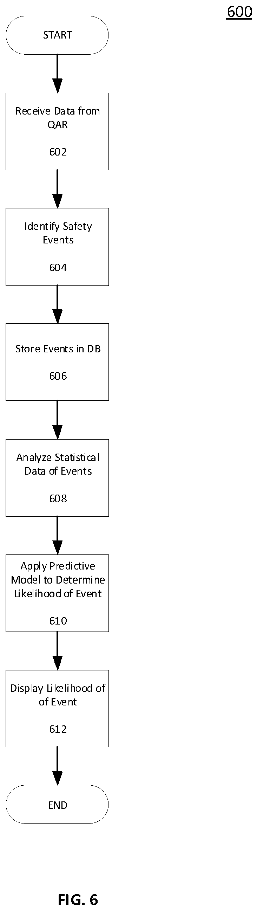

FIG. 6 shows a flowchart 600 of a method for calculating displaying flight safety analytics for an aircraft in accordance with one embodiment. First, historical flight data from an aircraft is received from a flight data quick access recorder (QAR) located on board the aircraft 602. The historical flight data is processed to identify safety events 604 that are then stored in an events database 606. The contents of the events database are analyzed to determine statistical data regarding the identified safety events 608. An onboard predictive model utilizes a statistical data to predict the likelihood of a safety event based on current flight data received from the aircraft 610. The likelihood of a predicted safety event is then displayed on a flight display for the aircrew 612.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, additional intervening elements, devices, features, or components may be present in an embodiment of the depicted subject matter.

In addition, certain terminology may also be used in the following description for the purpose of reference only, and thus are not intended to be limiting. For example, terms such as "upper", "lower", "above", and "below" refer to directions in the drawings to which reference is made. Terms such as "front", "back", "rear", "side", "outboard", and "inboard" describe the orientation and/or location of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second", and other such numerical terms referring to structures do not imply a sequence or order unless clearly indicated by the context.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for calculating and displaying flight safety analytics for an aircraft, comprising:
receiving historical flight data for the aircraft from a flight data quick access recorder (QAR) located onboard the aircraft;
processing the flight data to identify safety events and store the identified safety events in an events database;
analyzing the contents of the events database to determine statistical data regarding the identified safety events;
applying an onboard predictive model that utilizes the statistical data to predict the likelihood of a safety event based on current flight data received from the aircraft; and
displaying the predicted likelihood of a safety event on a flight display of the aircraft.

2. The method of Claim 1, where the safety events comprise terrain surrounding an airport.

3. The method of Claim 1, where the safety events comprise unfamiliar routes to an aircrew of the aircraft.

4. The method of Claim 1, where the likelihood of a safety event is predicted based on current flight conditions.

5. The method of Claim 1, where the likelihood of a safety event is predicted based the current phase of flight.

6. The method of Claim 1, where the displayed likelihood of a safety event is filtered based on time range.

7. The method of Claim 1, where the displayed likelihood of a safety event is filtered based on aircraft type.

8. The method of Claim 1, where the displayed likelihood of a safety event is filtered based on current flight conditions.

9. The method of Claim 1, where the display shows the likelihood of a safety event with frequency data.

10. The method of Claim 1, where the display shows the likelihood of a safety event with severity data.
